(19) Europäisches Patentamt
European Patent Office
Office européen des brevets

(11) EP 4 145 186 B1

(12) EUROPEAN PATENT SPECIFICATION

(45) Date of publication and mention of the grant of the patent:
**29.10.2025 Bulletin 2025/44**

(21) Application number: **20933471.3**

(22) Date of filing: **01.05.2020**

(51) International Patent Classification (IPC):
***G02B 1/115*** (2015.01) ***G02B 1/116*** (2015.01)
***G02B 1/14*** (2015.01) ***G02B 1/18*** (2015.01)
***G02C 7/02*** (2006.01) ***G02B 1/113*** (2015.01)

(52) Cooperative Patent Classification (CPC):
**G02B 1/113; G02B 1/115;** G02B 1/14; G02B 1/18

(86) International application number:
**PCT/JP2020/018446**

(87) International publication number:
**WO 2021/220513 (04.11.2021 Gazette 2021/44)**

(54) **OPTICAL MEMBER**
OPTISCHES ELEMENT
ÉLÉMENT OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.03.2023 Bulletin 2023/10**

(73) Proprietor: **Nikon-Essilor Co., Ltd.**
**Tokyo 130-0026 (JP)**

(72) Inventor: **ISHIMURA Kei**
**Tokyo 130-0026 (JP)**

(74) Representative: **Hoffmann Eitle**
**Patent- und Rechtsanwälte PartmbB**
**Arabellastraße 30**
**81925 München (DE)**

(56) References cited:
**WO-A1-2014/069250**
**JP-A- 2003 329 803**
**US-A1- 2016 154 254**
**US-B2- 8 189 261**
**JP-A- 2003 329 803**
**US-A1- 2015 234 209**
**US-B1- 6 250 758**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

TECHNICAL FIELD

The present disclosure relates to an optical member.

BACKGROUND ART

Optical members such as spectacle lenses are under active study, and Patent Literature 1 discloses a plastic optical product including a low refractive index layer and a high refractive index layer.
Each of JP 2019-15764 A (hereinafter Patent Literature 1), JP 2003 329803 A, US 2015/234209 A1, US 8 189 261 B2, US 2016/154254 A1, US 6 250 758 B1 forms part of the state of the art relative to the present disclosure.

SUMMARY OF INVENTION

The present disclosure relates to an optical member, comprising: a plastic base; a hard coat layer disposed on the plastic base; and an antireflection film disposed on the hard coat layer, wherein the antireflection film contains high refractive index layers and low refractive index layers that are alternately stacked, wherein a high refractive index layer of the high refractive index layers contains an oxide of at least one selected from the group consisting of titanium, zirconium, aluminum, niobium, tantalum, and lanthanum, wherein a low refractive index layer of the low refractive index layers contains at least one selected from the group consisting of silicon oxide, calcium fluoride, and magnesium fluoride, wherein the antireflection film has at least six layers in total of the high refractive index layers and the low refractive index layers, wherein a layer disposed closest to the plastic base in the antireflection film is the high refractive index layer, and wherein, in the antireflection film, when the low refractive index layer disposed closest to the plastic base is a first low refractive index layer, the low refractive index layer disposed next closest to the plastic base after the first low refractive index layer is a second low refractive index layer, and the high refractive index layer disposed closest to the plastic base is a first high refractive index layer, relations of Expressions 1 to 3 to be described later are satisfied.

BRIEF DESCRIPTION OF DRAWINGS

[FIG. 1] FIG. 1 is a cross-sectional view of an optical member in an embodiment.

DESCRIPTION OF EMBODOIMENT

Below, described in detail is an optical member of an embodiment.
It is desirable for an optical member to have excellent antireflection performance and abrasion resistance as well as excellent adhesion of an antireflection film. The foregoing characteristics can be achieved with the optical member of the present embodiment.
More specifically, the foregoing characteristics can be achieved when low refractive index layers and high refractive index layers in an antireflection film are disposed according to a predetermined configuration and, besides, the optical member satisfies Expressions 1 to 3 to be described later.
Note that, in the description, numerical values given before and after "to" are included in the range as the lower and upper limits thereof.
In the description, a refractive index means an e-line refractive index.
FIG. 1 is a cross-sectional view of the optical member in an embodiment.
An optical member 10 shown in FIG. 1 includes a plastic base 12, a primer layer 14, a hard coat layer 16, an antireflection film 18, and a water and oil repellent layer 20 in this order.
While the primer layer 14 and the water and oil repellent layer 20 are included in the optical member 10, a primer layer and a water and oil repellent layer are optional members, and it suffices if the optical member in this disclosure includes at least a plastic base, a hard coat layer, and a predetermined antireflection film.
The antireflection layer 18 includes a first high refractive index layer 22H, a first low refractive index layer 22L, a second high refractive index layer 24H, a second low refractive index layer 24L, a third high refractive index layer 26H, a third low refractive index layer 26L, a fourth high refractive index layer 28H, and a fourth low refractive index layer 28L, in this order from the plastic base 12 side.
In FIG. 1, the antireflection film 18 has eight layers of high refractive index layers and low refractive index layers in total, but, as described below, the optical member in this disclosure is not limited to this embodiment, and it suffices if the optical member has at least six layers in total of high refractive index layers and low refractive index layers.
In the description, high refractive index layers are described as "first high refractive index layer," "second high

refractive index layer," and so forth in the order from the plastic base side. In addition, low refractive index layers are described as "first low refractive index layer," "second low refractive index layer," and so forth in the order from the plastic base side.

While the respective layers are disposed only on one of opposite surfaces of the plastic base 12 in FIG. 1, the primer layer 14, the hard coat layer 16, the antireflection film 18, and the water and oil repellent layer 20 may be disposed in this order on each of the opposite surfaces of the plastic base 12. In other words, the plastic base may have the hard coat layer and the antireflection film disposed on each of its opposite surfaces.

First, the antireflection film in which the optical member is characterized will be described in detail, and other members will be thereafter described in detail.

(Antireflection Film)

The optical member includes an antireflection film.

The antireflection film constitutes a layer having a function of preventing the reflection of incident light. Specifically, the antireflection film may have low reflection characteristics over the entire visible range from 380 to 780 nm (wide-band low reflection characteristics).

The antireflection film includes high refractive index layers and low refractive index layers that are alternately stacked. It suffices if predetermined high refractive index layers and predetermined low refractive index layers are alternately disposed in the antireflection film. That is, a low refractive index layer is disposed between two high refractive index layers, while a high refractive index layer is disposed between two low refractive index layers. Meanwhile, as described later, other layers (such as an $SnO_2$ layer and an ITO layer) may be disposed between a high refractive index layer and a low refractive index layer. ITO means indium tin oxide, i.e., a mixture of indium oxide ($In_2O_3$) and tin oxide ($SnO_2$).

A preferred high refractive index layer is a layer having a refractive index of not lower than 1.60.

The high refractive index layer contains an oxide of at least one selected from the group consisting of titanium, zirconium, aluminum, niobium, tantalum, and lanthanum. In particular, the high refractive index layer preferably contains zirconium oxide ($ZrO_2$).

The high refractive index layer may contain two or more materials.

A preferred low refractive index layer is a layer having a refractive index of lower than 1.60.

The low refractive index layer contains at least one selected from the group consisting of silicon oxide, calcium fluoride, and magnesium fluoride. In particular, the low refractive index layer preferably contains silicon dioxide ($SiO_2$).

The low refractive index layer may contain two or more materials.

The antireflection film has at least six layers in total of the high refractive index layers and the low refractive index layers. In other words, the antireflection film includes at least three high refractive index layers and at least three low refractive index layers.

The above-described total number of layers is preferably at least eight layers because at least one of antireflection performance and abrasion resistance of the optical member, and adhesion of the antireflection film becomes more excellent (hereinafter, simply described as "predetermined effect becomes more excellent"). The upper limit of the total number is not particularly limited and is preferably not more than 14 layers, and more preferably not more than 12 layers in terms of productivity.

The layer disposed closest to the plastic base in the antireflection film is the high refractive index layer.

More specifically, as shown in FIG. 1, a first high refractive index layer 22H is disposed at the position closest to the plastic base 12 in the antireflection film 18.

With the high refractive index layer being disposed at the predetermined position as described above, adhesion of the antireflection film is improved. While the reason therefor is not clear, it is presumably because many materials of the high refractive index layer exhibit tensile stress and disposition of such materials at the position as described above suppresses peeling of the antireflection film.

In the antireflection film, when the low refractive index layer disposed closest to the plastic base is the first low refractive index layer, the low refractive index layer disposed next closest to the plastic base after the first low refractive index layer is the second low refractive index layer, and the high refractive index layer disposed closest to the plastic base is the first high refractive index layer, the optical member satisfies relations of Expressions 1 to 3.

$$\text{Expression 1} \quad L1 + L2 \geq 400 \text{ nm}$$

$$\text{Expression 2} \quad L1/H1 \leq 25.0$$

$$\text{Expression 3} \quad (L1 + L2)/H1 \leq 50.0$$

L1 denotes a physical thickness of the first low refractive index layer. L2 denotes a physical thickness of the second low refractive index layer. H1 denotes a physical thickness of the first high refractive index layer.

Expression 1 shows a total of the physical thickness of the first low refractive index layer and the physical thickness of the second low refractive index layer. When the relation of Expression 1 is satisfied, abrasion resistance of the optical member is mainly improved.

In particular, L1 + L2 preferably results in not less than 450 nm and more preferably not less than 480 nm because the predetermined effect becomes more excellent. The upper limit thereof is not particularly limited and is preferably not more than 600 nm and more preferably not more than 550 nm in terms of productivity.

Expression 2 shows a ratio of the physical thickness of the first low refractive index layer to the physical thickness of the first high refractive index layer. When the relation of Expression 2 is satisfied, adhesion of the antireflection film is mainly improved.

In particular, L1/H1 preferably results in not more than 20.0 and more preferably not more than 8.0 because the predetermined effect becomes more excellent. The lower limit thereof is not particularly limited and is preferably not less than 3.0 and more preferably not less than 5.0.

Expression 3 shows a ratio of a total thickness of the physical thickness of the first low refractive index layer and the physical thickness of the second low refractive index layer to the physical thickness of the first high refractive index layer. When the relation of Expression 3 is satisfied, adhesion of the antireflection film is mainly improved.

In particular, (L1 + L2)/H1 preferably results in not more than 46.0 because the predetermined effect becomes more excellent. The lower limit thereof is not particularly limited and is preferably not less than 25.0 and more preferably not less than 30.0.

In particular, Expression 4 is preferably satisfied because antireflection performance of the optical member becomes more excellent.

$$\text{Expression 4} \quad L2 \geq L1$$

The physical thickness of the first high refractive index layer is not particularly limited as long as the foregoing relations are satisfied and is preferably 5.0 to 25.0 nm and more preferably 8.0 to 20.0 nm because the predetermined effect becomes more excellent.

The physical thickness of the first low refractive index layer is not particularly limited as long as the foregoing relations are satisfied and is preferably not less than 50 nm because abrasion resistance becomes more excellent. The upper limit thereof is not particularly limited and is preferably not more than 300 nm and more preferably not more than 250 nm.

The physical thickness of the second low refractive index layer is not particularly limited as long as the foregoing relations are satisfied and is preferably 200 to 550 nm and more preferably 300 to 500 nm because the predetermined effect becomes more excellent.

The physical thickness of the second high refractive index layer is not particularly limited and is preferably 5.0 to 25.0 nm and more preferably 8.0 to 20.0 nm because the predetermined effect becomes more excellent.

When the antireflection film includes eight layers in total of the high refractive index layers and the low refractive index layers, the physical thickness of the third low refractive index layer is preferably 15 to 45 nm and more preferably 20 to 40 nm because the predetermined effect becomes more excellent.

When the antireflection film includes eight layers in total of the high refractive index layers and the low refractive index layers, the physical thickness of the fourth low refractive index layer is preferably 70 to 110 nm and more preferably 85 to 100 nm because the predetermined effect becomes more excellent.

When the antireflection film includes eight layers in total of the high refractive index layers and the low refractive index layers, the physical thickness of the third high refractive index layer is preferably 10 to 30 nm and more preferably 15 to 25 nm because the predetermined effect becomes more excellent.

When the antireflection film includes eight layers in total of the high refractive index layers and the low refractive index layers, the physical thickness of the fourth high refractive index layer is preferably 50 to 110 nm and more preferably 55 to 110 nm because the predetermined effect becomes more excellent.

The producing method of the antireflection film is not particularly limited, and examples thereof include dry methods such as vacuum evaporation, sputtering, ion plating, ion-beam assisted deposition and CVD.

In particular, in the production of the antireflection film, some of the layers included in the antireflection film are preferably formed while receiving energy from an ion beam (ion-assisted vapor deposition) because the predetermined effect becomes more excellent.

The antireflection film may further include an $SnO_2$ layer or an ITO layer aside from the high refractive index layers and the low refractive index layers described above. An $SnO_2$ layer and an ITO layer can function as an antistatic layer.

A position at which an $SnO_2$ layer or an ITO layer is disposed in the antireflection film is not particularly limited and may be a position between the high refractive index layer and the low refractive index layer described above.

<Plastic Base>

The plastic base is a member that supports the antireflection film.

Plastic (so-called resin) contained in the plastic base is not particularly limited in type, and examples thereof include (meth)acrylic ester resin, thiourethane resin, allyl resin, episulfide resin, polycarbonate, urethane resin, polyester, polystyrene, polyethersulfone, poly-4-methylpentene-1, and diethylene glycol bis(allyl carbonate) resin (CR-39). Among those, thiourethane resin, episulfide resin, or diethylene glycol bis(allyl carbonate) resin is preferred.

For the plastic base, a plastic spectacle lens base is preferred.

The plastic spectacle lens base is not particularly limited in type, and an embodiment in which the base has a convex surface and a concave surface is exemplified. More specifically, examples thereof include a finished lens that is obtained by optically finishing both the convex and concave surfaces and shaping the lens according to a desired power, a semi-finished lens whose convex surface is solely finished as an optical surface (e.g., a spherical surface, a rotationally symmetric aspheric surface, a progressive surface), and a lens obtained by processing and polishing the concave surface of a semi-finished lens according to the prescription of the wearer.

The thickness of the plastic base is not particularly limited and, in most cases, is about 1 to about 30 mm for the sake of handleability.

The refractive index of the plastic base is not particularly limited and is often not less than 1.50, preferably 1.60 to 1.80, and more preferably 1.60 to 1.74.

The plastic base need not be colorless as long as it is translucent, and may contain a UV absorber or a colorant that absorbs light in a specific wavelength region from the ultraviolet region through the infrared region.

In addition, the plastic base may contain an additive such as a bluing agent, a light stabilizer, and an antioxidant.

<Primer Layer>

The optical member may contain a primer layer.

The primer layer is a layer disposed between the plastic base and the hard coat layer and serves to improve adhesion of the hard coat layer to the plastic base and to improve strength of a plastic spectacle lens against a static load or an impact, the plastic spectacle lens having the antireflection film disposed on the hard coat layer.

A material constituting the primer layer is not particularly limited, and any known materials are usable. For instance, resin is mainly used. The resin for use is not particularly limited in type, and examples thereof include polyurethane resin, epoxy resin, phenol resin, polyimide resin, polyester resin, bismaleimide resin, and polyolefin resin, with polyurethane resin being preferred.

The primer layer may include other components than the foregoing resin.

Examples of other components include: particles of an oxide of at least one metal selected from Si, Al, Sn, Sb, Ta, Ce, La, Fe, Zn, W, Zr, In, and Ti or composite oxide particles thereof; a hydrolyzable silicon compound and/or a hydrolyzed condensate thereof; a conductive filler; a specific polymer; and a surfactant.

The method of forming the primer layer is not particularly limited, and any known method may be employed. One exemplary method involves applying a primer layer-forming composition containing a predetermined resin onto the plastic base, optionally followed by curing treatment, thereby forming the primer layer.

The method of applying the primer layer-forming composition is not particularly limited, and for example, the method of applying the hard coat layer-forming composition onto the plastic base can be employed.

The thickness of the primer layer is not particularly limited and is preferably from 0.3 to 2 μm.

<Hard Coat Layer>

The optical member includes a hard coat layer.

The hard coat layer is a layer that is disposed between the plastic base and the antireflection film and that imparts scratch resistance to the plastic base.

The hard coat layer preferably has, in terms of pencil hardness, the hardness "H" or higher hardness determined by the test method according to International Standard ISO 15184 and Japanese Industrial Standards JIS K 5600, the Japanese Industrial Standards being established based on the International Standard.

For the hard coat layer, known hard coat layers are usable, and examples thereof include organic hard coat layers, inorganic hard coat layers, and organic-inorganic hybrid hard coat layers. In the spectacle lens field, for instance, organic-inorganic hybrid hard coat layers are typically employed.

The hard coat layer preferably contains a polymer of polymerizable monomers (a polymer obtained through

polymerization of polymerizable monomers), and/or a condensation product of a hydrolyzable organosilicon compound.

The polymerizable monomer is not particularly limited, and examples thereof include a specific (meth)acrylate, silsesquioxane having a radical polymerizable group, a polyfunctional acrylate, a compound having a plurality of epoxy groups, and a silsesquioxane compound having an oxetanyl group, which will be described later.

The hydrolyzable organosilicon compound is not particularly limited, and examples thereof include an organosilicon compound having an epoxy group to be described later.

The hard coat layer may also contain an inorganic component such as metal oxide fine particles to be described later.

The hard coat layer is preferably a layer formed from a hard coat layer-forming composition containing a polymerizable monomer.

(Meth)acrylate Having At Least One Group Selected from Group Consisting of Phosphate Group and Sulfonate Group)

One example of a polymerizable monomer that may be contained in the hard coat layer-forming composition is (meth)acrylate (hereinafter also simply called "specific (meth)acrylate") having at least one group selected from the group consisting of a phosphate group and a sulfonate group (the at least one group being hereinafter also simply called "specific group").

The term "(meta)acrylate" refers to acrylate or methacrylate.

For the specific group, a phosphate group is preferred.

The number of the specific groups in the specific (meth)acrylate is at least one and may be two or more. The upper limit thereof may be not more than 5, for instance.

The specific (meth)acrylate may be monofunctional or polyfunctional. The "polyfunctional" means that the specific (meth)acrylate has two or more specific groups.

The phosphate group is represented by the formula below. * denotes a bonding position.

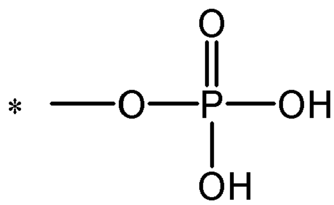

The sulfonate group is represented by the formula below.

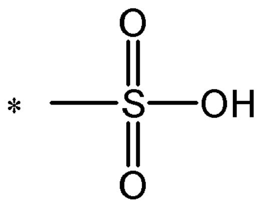

For the specific (meth)acrylate, a compound represented by Formula (A) is preferred.

Formula (A) $CH_2=CR^{a1}-COO-L^a-R^{a2}$

$R^{a1}$ denotes a hydrogen atom or a methyl group.

$L^a$ denotes a divalent hydrocarbon group that may include a heteroatom (e.g., oxygen atom, nitrogen atom, or sulfur atom). The number of carbon atoms in the divalent hydrocarbon group is not particularly limited and is preferably 1 to 10. Examples of the divalent hydrocarbon group include an alkylene group, an alkenylene group, an alkynylene group, an arylene group, and combinations thereof, with preferred being an alkylene group that may include a heteroatom (e.g., -O-alkylene group-).

$R^{a2}$ denotes a group selected from the group consisting of a phosphate group and a sulfonate group.

(Silsesquioxane Having Radical Polymerizable Group)-10

Another example of a polymerizable monomer that may be contained in the hard coat layer-forming composition

is silsesquioxane having a radical polymerizable group.

For the radical polymerizable group, a group having an ethylenically unsaturated bond is preferred. Examples of the group having an ethylenically unsaturated bond include a (meth)acryloyl group, a styryl group and a vinyl group.

Typically, a silsesquioxane compound is a silane compound having the basic structure represented by Formula (B) as obtained through hydrolysis of a trifunctional silane compound such as alkoxysilane, chlorosilane, or silanol. Known examples of the structure of the silsesquioxane compound include, in addition to an irregular form called a random structure, a ladder structure, a cage type (completely condensed cage type) structure, and an incomplete cage type structure (which is a partially cleaved structure of cage type structure; e.g., a structure lacking part of silicon atoms in a cage type structure, a structure in which a silicon-oxygen bond is cleaved in part of a cage type structure).

In Formula (B) below, $R^b$ denotes an organic group.

Formula (B) $R^b\text{-}SiO_{3/2}$

The structure of the silsesquioxane compound having a radical polymerizable group is not particularly limited and may be any of the random structure, the ladder structure, the cage type structure, the incomplete cage type structure, and combinations of plural structures.

The equivalent of radical polymerizable group contained in the silsesquioxane compound is not particularly limited and is preferably 30 to 500 g/eq and more preferably 30 to 150 g/eq because the resulting hard coat layer can have more excellent hardness.

The silsesquioxane compound having a radical polymerizable group may be obtained through synthesis by a known method or may be a commercial product.

(Polyfunctional Acrylate)

Another example of a polymerizable monomer that may be contained in the hard coat layer-forming composition is a polyfunctional (meth)acrylate that is different from the specific (meth)acrylate and the silsesquioxane having a radical polymerizable group.

The term "polyfunctional (meth)acrylate" refers to a compound having a plurality of (meta)acryloyl groups. The number of (meta)acryloyl groups is not particularly limited and is preferably 2 to 6 and more preferably 2 to 3.

For the polyfunctional (meth)acrylate, a compound represented by Formula (C) is preferred.

Formula (C) $CH_2\text{=}CR^{c1}\text{-CO-}L^{c1}\text{-CO-}CR^{c2}\text{=}CH_2$

$R^{c1}$ and $R^{c2}$ each independently denote a hydrogen atom or a methyl group.

$L^{c1}$ denotes a divalent hydrocarbon group that may include a heteroatom (e.g., oxygen atom, nitrogen atom, sulfur atom). The number of carbon atoms in the divalent hydrocarbon group is not particularly limited and is preferably 1 to 10. Examples of the divalent hydrocarbon group include an alkylene group, an alkenylene group, an alkynylene group, an arylene group, and combinations thereof, each of which may include a heteroatom, with an alkylene group which may include a heteroatom being preferred.

In particular, an alkylene group including an oxygen atom is preferred, and a group represented by $\text{-O-}(L^{c2}\text{-O})_r\text{-}$ is preferred. $L^{c2}$ denotes an alkylene group (having preferably 1 to 3 carbon atoms). r denotes an integer of at least 1, preferably an integer of 1 to 10, and more preferably an integer of 2 to 5.

(Compound Having Plurality of Epoxy Groups)

Another example of a polymerizable monomer that may be contained in the hard coat layer-forming composition is a compound having a plurality of epoxy groups (hereinafter also simply called "polyfunctional epoxy compound").

The epoxy group is a group represented by Formula (D) below. $R^d$ denotes a hydrogen atom or an alkyl group (e.g., methyl group, ethyl group, or propyl group). * denotes a bonding position.

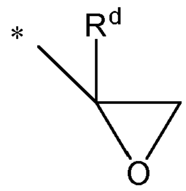

(D)

The polyfunctional epoxy compound contains a plurality of (at least two) epoxy groups. The number of epoxy groups is not particularly limited and may typically be 2 to 6 or 2 to 3.

The type of the polyfunctional epoxy compound is not particularly limited, and known polyfunctional epoxy compounds are usable. Examples of the polyfunctional epoxy compound include a bisphenol A type epoxy compound, a bisphenol F type epoxy compound, a phenol novolac type epoxy compound, a cresol novolac type epoxy compound, and an aliphatic glycidyl ether type epoxy compound.

(Silsesquioxane Compound Having Oxetanyl Group)

Another example of a polymerizable monomer that may be contained in the hard coat layer-forming composition is a silsesquioxane compound having an oxetanyl group.

The oxetanyl group is a group represented by Formula (E) below. $R^e$ denotes a hydrogen atom or an alkyl group (e.g., methyl group, ethyl group, propyl group). * denotes a bonding position.

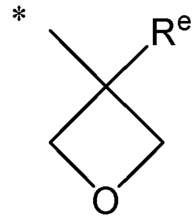

(E)

The structure of the silsesquioxane compound having an oxetanyl group is not particularly limited and may be any of the random structure, the ladder structure, the cage type structure, the incomplete cage type structure, and combinations of plural structures.

The equivalent of oxetanyl group contained in the silsesquioxane compound is not particularly limited and is preferably 50 to 500 g/eq, and more preferably 150 to 300 g/eq because the resulting hard coat layer can have more excellent hardness.

The silsesquioxane compound having an oxetanyl group may be obtained through synthesis by a known method or may be a commercial product. Exemplary commercial products include OX-SQ TX-100, OX-SQ SI-20, and OX-SQ HDX manufactured by Toagosei Co., Ltd.

The hard coat layer is preferably a layer formed from a hard coat layer-forming composition containing a hydrolyzable organosilicon compound, a hydrolysate thereof, and a hydrolyzed condensate thereof.

(At Least One Selected from Group Consisting of Hydrolyzable Organosilicon Compound Represented by Formula (F), Hydrolysate Thereof, and Hydrolyzed Condensate Thereof)

The hard coat layer-forming composition preferably contains at least one selected from the group consisting of a hydrolyzable silicon compound represented by Formula (F), a hydrolysate thereof, and a hydrolyzed condensate thereof (hereinafter also simply called "hydrolyzable organosilicon compound(s)"). The hydrolyzable organosilicon compound refers to a compound in which an organic group and a hydrolyzable group are bonded to a silicon atom. The organic group is preferably an epoxy group.

Formula (F) $R^{f1}\text{-}L^{f}\text{-}Si(R^{f2})_s(R^{f3})_{3-s}$

$R^{f1}$ denotes an epoxy group.

The definition of the epoxy group is as described above.

$L^f$ denotes a divalent hydrocarbon group that may include a heteroatom. The number of carbon atoms in the hydrocarbon group is not particularly limited and is preferably 1 to 10. Examples of the divalent hydrocarbon group include an alkylene group, an alkenylene group, an alkynylene group, an arylene group, and combinations thereof, with an alkylene group that may include a heteroatom being preferred.
$R^{f2}$ denotes a hydrolyzable group. The hydrolyzable group is directly bonded to Si (silicon atom) and may promote a hydrolysis reaction and/or a condensation reaction. Examples of the hydrolyzable group include an alkoxy group, a hydroxyl group, a halogen atom, an acyloxy group, an alkenyloxy group and an isocyanate group.
$R^{f3}$ denotes an alkyl group. The number of carbon atoms in the alkyl group represented by $R^{f3}$ is preferably 1 to 10.
s denotes an integer of 1 to 3. s is preferably 3.
A hydrolysate of the hydrolyzable organosilicon compound refers to a compound obtained through hydrolysis of a hydrolyzable group(s) in the hydrolyzable organosilicon compound. The hydrolysate may be a product obtained through hydrolysis of all the hydrolyzable groups (complete hydrolysate) or a product obtained through hydrolysis of some of the hydrolyzable groups (partial hydrolysate). That is, the hydrolysate may be a complete hydrolysate, a partial hydrolysate, or a mixture thereof.
A hydrolyzed condensate of the hydrolyzable organosilicon compound refers to a compound obtained through hydrolysis of a hydrolyzable group(s) in the hydrolyzable organosilicon compound and subsequent condensation of the resulting hydrolysate. The hydrolyzed condensate may be a product obtained through hydrolysis of all the hydrolyzable groups and subsequent condensation of the whole of the resulting hydrolysate (completely hydrolyzed condensate) or a product obtained through hydrolysis of some of the hydrolyzable groups and subsequent condensation of part of the resulting hydrolysate (partially hydrolyzed condensate). That is, the hydrolyzed condensate may be a completely hydrolyzed condensate, a partially hydrolyzed condensate or a mixture thereof.
One type of the hydrolyzable organosilicon compound may be used alone, or two or more types of the hydrolyzable organosilicon compound may be used at once. The hydrolyzable organosilicon compound may also be used in combination with the hard coat layer-forming composition containing a polymerizable monomer.

(Metal Oxide Fine Particles)

The hard coat layer-forming composition may contain metal oxide fine particles.
The metal oxide fine particles are not particularly limited in type, and known metal oxide fine particles are usable. Exemplary metal oxide fine particles include fine particles of an oxide of at least one metal selected from Si, Al, Sn, Sb, Ta, Ce, La, Fe, Zn, W, Zr, In and Ti. In particular, the metal oxide fine particles are preferably fine particles of a Si-containing oxide (silicon oxide fine particles), fine particles of a Sn-containing oxide (tin oxide fine particles), fine particles of a Zr-containing oxide (zirconium oxide fine particles), or fine particles of a Ti-containing oxide (titanium oxide fine particles) for the sake of handleability.
The metal oxide fine particles may contain, among the metals listed above, one metal (one type of metallic atoms) alone or two or more metals (two or more types of metallic atoms) .
Si (silicon) is sometimes classified as metalloid but is classified as metal in the present description.
The average particle size of the metal oxide fine particles is not particularly limited and is preferably 1 to 200 nm and more preferably 5 to 30 nm, for instance. When the average particle size is within the above range, the metal oxide fine particles exhibit excellent dispersion stability in the hard coat layer-forming composition. The average particle size above is determined by measuring the diameters of at least twenty metal oxide fine particles with a transmission electron microscope and calculating the arithmetic mean of the measurements. When the metal oxide fine particles do not have a perfect circle shape, the major axis length is regarded as the diameter.
Various functional groups may optionally be introduced to surfaces of the metal oxide fine particles.

(Other Components)

The hard coat layer-forming composition may contain components other than the foregoing components.
The hard coat layer-forming composition containing a polymerizable monomer may contain a radical polymerization initiator. Examples of the radical polymerization initiator include a photo-radical polymerization initiator and a thermal-radical polymerization initiator.
The hard coat layer-forming composition containing a polymerizable monomer may contain a cationic polymerization initiator. Examples of the cationic polymerization initiator include a photo-cationic polymerization initiator and a thermal-cationic polymerization initiator.
The hard coat layer-forming composition containing a hydrolyzable organosilicon compound may contain a curing catalyst. Examples of the curing catalyst include a metal chelate compound and an organotin compound.
The hard coat layer-forming composition may contain a solvent.
The solvent may be water or an organic solvent.

The organic solvent is not particularly limited in type, and examples thereof include an alcoholic solvent, a ketone solvent, an ether solvent, an ester solvent, a hydrocarbon solvent, a halogenated hydrocarbon solvent, an amide solvent, a sulfone solvent and a sulfoxide solvent.

The hard coat layer-forming composition may optionally contain various additives such as a UV absorber, an antiaging agent, a coating adjusting agent, a light stabilizer, an antioxidant, a discoloration preventing agent, a dye, a filler and an internal mold release agent.

The hard coat layer-forming composition contains various components as described above.

The producing method of the hard coat layer-forming composition is not particularly limited; for example, the foregoing components may be mixed at one time or in separate steps.

The polymerizable monomer content of the hard coat layer-forming composition is not particularly limited and is preferably 1 to 100 mass% and more preferably 5 to 60 mass% based on the total solids (hard coat layer constituents) of the hard coat layer-forming composition because the predetermined effect becomes more excellent.

The total solids (hard coat layer constituents) refer to components that constitute the hard coat layer formed through curing treatment, and the solvent is not included in the total solids. Even if a component is a liquid, this component is counted as a solid as long as this is a constituent of the hard coat layer.

The hydrolyzable organosilicon compound content of the hard coat layer-forming composition is not particularly limited and is preferably 0.5 to 70 mass% and more preferably 1 to 60 mass% based on the total solids of the hard coat layer-forming composition because the predetermined effect becomes more excellent.

The metal oxide fine particle content of the hard coat layer-forming composition is not particularly limited and is preferably 10 to 90 mass% and more preferably 25 to 75 mass% based on the total solids of the hard coat layer-forming composition because the predetermined effect becomes more excellent.

A preferred embodiment of the hard coat layer-forming composition is a hard coat layer-forming composition containing a polyfunctional epoxy compound, a silsesquioxane compound having an oxetanyl group, and a polymerization initiator (hereinafter, also simply referred to as "specific composition").

For the polymerization initiator, a cationic polymerization initiator is preferably used, and a photo-cationic polymerization initiator and a thermal-cationic polymerization initiator may be used in combination.

The polyfunctional epoxy compound content of the specific composition is not particularly limited and is preferably 1 to 15 mass% and more preferably 1 to 10 mass% based on the total solids of the specific composition (hard coat layer constituents) because this brings about excellent abrasion resistance and appearance characteristics of the resulting hard coat layer as well as high curing reaction rate.

The amount of the silsesquioxane compound having an oxetanyl group in the specific composition is not particularly limited and is preferably 35 to 70 mass% and more preferably 35 to 60 mass% based on the total solids of the specific composition because this brings about more excellent abrasion resistance and low stress of the resulting hard coat layer.

The polymerization initiator content of the specific composition is not particularly limited and is preferably 0.1 to 3.0 mass% and more preferably 0.2 to 1.5 mass% based on the total solids of the specific composition because this brings about more excellent abrasion resistance of the resulting hard coat layer.

When the metal oxide particles are contained in the specific composition, the metal oxide particle content is not particularly limited and is preferably 25 to 60 mass% and more preferably 30 to 50 mass% based on the total solids of the specific composition because this brings about more excellent abrasion resistance of the resulting hard coat layer.

To the hard coat layer-forming composition containing the polyfunctional epoxy compound and the silsesquioxane compound having an oxetanyl group, a hydrolyzable silicon compound(s) may be added. The hydrolyzable silicon compound content is not particularly limited and is preferably less than 10 mass% and more preferably less than 9 mass% based on the total solids of the specific composition because this brings about more excellent adhesion of the hard coat layer to the base. The lower limit thereof is not particularly limited and is for example at least 1 mass%.

The amount of the silsesquioxane compound having an oxetanyl group with respect to the total mass of the polyfunctional epoxy compound and the silsesquioxane compound having an oxetanyl group is preferably more than 70 mass%, more preferably not less than 80 mass%, and even more preferably not less than 85 mass% because this brings about more excellent abrasion resistance and appearance characteristics of the resulting hard coat layer. The upper limit thereof is not particularly limited and may be not more than 98 mass%.

The total mass of the polyfunctional epoxy compound and the silsesquioxane compound having an oxetanyl group based on the total solids of the specific composition is not particularly limited and is preferably 35 to 70 mass% because this brings about excellent abrasion resistance of the resulting hard coat layer.

One exemplary formation method of the hard coat layer using the hard coat layer-forming composition is a method involving applying the hard coat layer-forming composition onto the plastic base (or the primer layer) to form a coating and subjecting the coating to curing treatment such as light irradiation treatment and heating treatment.

For the curing treatment, either one or both of light irradiation treatment and heating treatment may be performed. When both of the treatments are performed, light irradiation treatment and heating treatment may be performed at once, or

one of the treatments may be performed and followed by the other treatment.

The formation of the coating may optionally be followed by drying treatment such as heating treatment in order to remove the solvent from the coating.

The method of applying the hard coat layer-forming composition is not particularly limited, and known methods (e.g., dip coating, spin coating, spray coating, ink jet coating, and flow coating) are usable.

The coating thickness of the formed coating is not particularly limited and suitably selected to allow the resulting hard coat layer to have a predetermined coating thickness.

The conditions for light irradiation treatment are not particularly limited, and suitable conditions are selected according to the type of the polymerization initiator to be used.

The light for light irradiation is not particularly limited in type, and examples thereof include a UV ray and a visible ray. The light source may be, for example, a high-pressure mercury vapor lamp.

The cumulative light quantity during light irradiation is not particularly limited and is preferably 100 to 3,000 $mJ/cm^2$ and more preferably 100 to 2,000 $mJ/cm^2$ for the sake of productivity and curing properties of the coating.

The conditions for heating treatment are not particularly limited, and the optimal conditions are selected according to the type of the polymerization initiator for use.

The heating temperature is preferably 30 to 100°C, and the heating time is preferably 5 to 360 minutes.

The coating thickness of the hard coat layer is not particularly limited and is preferably not less than 1 $\mu$m, more preferably not less than 3 $\mu$m, and even more preferably not less than 10 $\mu$m. The upper limit of the coating thickness may be not more than 30 $\mu$m, for instance.

The above coating thickness is the average coating thickness, which is determined by measuring the coating thickness of the hard coat layer at given five points and calculating the arithmetic mean of the measurements.

The hard coat layer may contain additives such as a bluing agent, a light stabilizer, and an antioxidant.

<Water and Oil Repellent Layer>

The optical member may contain a water and oil repellent layer.

The optical member preferably includes the water and oil repellent layer on a surface of the antireflection film on the opposite side from the plastic base. In particular, the optical member preferably includes the water and oil repellent layer as an outermost layer.

The water and oil repellent layer decreases surface energy of the optical member and improves contamination preventing function of the optical member and sliding properties of the optical member surface, thereby improving wear resistance of the optical member.

The material constituting the water and oil repellent layer is not particularly limited, and examples thereof include a fluorine-containing compound (compound containing a fluorine atom) and a silicon-containing compound (compound containing a silicon atom). In particular, the water and oil repellent layer preferably contains a fluorine-containing compound and more preferably contains at least one selected from the group consisting of a fluorine-substituted, alkyl group-containing organosilicon compound, a hydrolysate thereof, and a hydrolyzed condensate thereof.

For the material constituting the water and oil repellent layer, one type of material may be used alone, or two or more types of materials may be used in combination.

The fluorine-substituted, alkyl group-containing organosilicon compound refers to an organosilicon compound containing an alkyl group with a part of or all of hydrogen atoms being substituted with fluorine atoms and includes a hydrolyzable group.

The hydrolyzable group is directly connected to a silicon atom and may promote a hydrolysis reaction and a condensation reaction, and examples thereof include an alkoxy group, a halogen atom, an acyloxy group, an alkenyloxy group, and an isocyanate group. In cases where plural hydrolyzable groups are directly connected to one silicon atom, they may be the same or different.

A hydrolysate of the fluorine-substituted, alkyl group-containing organosilicon compound refers to a compound obtained through hydrolysis of a hydrolyzable group(s) in the fluorine-substituted, alkyl group-containing organosilicon compound. The hydrolysate may be a product obtained through hydrolysis of all the hydrolyzable groups (complete hydrolysate) or a product obtained through hydrolysis of some of the hydrolyzable groups (partial hydrolysate). That is, the hydrolysate may be a complete hydrolysate, a partial hydrolysate or a mixture thereof.

A hydrolyzed condensate of the fluorine-substituted, alkyl group-containing organosilicon compound refers to a compound obtained through hydrolysis of a hydrolyzable group(s) in the fluorine-substituted, alkyl group-containing organosilicon compound and subsequent condensation of the resulting hydrolysate. The hydrolyzed condensate may be a product obtained through hydrolysis of all the hydrolyzable groups and subsequent condensation of the whole of the resulting hydrolysate (completely hydrolyzed condensate) or a product obtained through hydrolysis of some of the hydrolyzable groups and subsequent condensation of part of the resulting hydrolysate (partially hydrolyzed condensate). That is, the hydrolyzed condensate may be a completely hydrolyzed condensate, a partially hydrolyzed condensate or a

mixture thereof.

The method of forming the water and oil repellent layer is not particularly limited and may be arbitrarily selected depending on the material for use, the desired performance or thickness, and other factors. Exemplary methods include a method involving coating a water and oil repellent layer-forming composition containing the fluorine-substituted, alkyl group-containing organosilicon compound onto the lens base, optionally followed by curing treatment, and a vacuum evaporation method.

The thickness of the water and oil repellent layer included in the optical member is not particularly limited and is preferably 5 to 35 nm. When the thickness is within the foregoing range, the resulting optical member has excellent water and oil repellency.

EXAMPLES

The foregoing embodiments are described below in further detail by way of examples and comparative examples; however, the invention should not be construed as being limited to the following examples.

<Example 1>

For the plastic base, a thiourethane-based synthetic resin substrate with a refractive index of 1.60 was prepared.

Next, a polyurethane primer layer (thickness: 1 μm) with a refractive index of 1.67 and a silicon hard coat layer (thickness: 3 μm) with a refractive index of 1.67 were sequentially formed on each of the opposite surfaces of the plastic base. The silicon hard coat layer with a refractive index of 1.67 was formed by thermally curing a hard coat composition containing an organosilicon compound (including a hydrolysate thereof and a hydrolyzed condensate thereof) having an epoxy group and composite oxide fine particles composed mainly of $TiO_2$.

Subsequently, the obtained plastic base was set on a rotatable dome installed in a vacuum chamber of a vacuum evaporation device ("ACE-1150", manufactured by SHINCRON CO., LTD.), the chamber was evacuated to a pressure of $1.3 \times 10^{-3}$ Pa, and Ar ion beam cleaning was performed on the hard coat layer for 60 seconds under conditions of an accelerating voltage of 500 V and an accelerating current of 100 mA. Thereafter, a first layer to an eighth layer each having the relevant physical thickness shown in Table 1 described later were stacked through the electron beam process with each of these layers being irradiated with an Ar ion beam under conditions of an accelerating voltage of 500 V and an accelerating current of 250 mA, whereby the antireflection film was formed. The antireflection film was formed on each of the opposite surfaces of the plastic base.

The plastic base having the antireflection films was then taken out from the vacuum evaporation device, and the water and oil repellent layer was formed on each antireflection film by dipping. For the material of the water and oil repellent layer, use was made of a mixture liquid of OPTOOL AES4E (fluorine-substituted, alkyl group-containing organosilicon compound solution, manufactured by Daikin Industries, Ltd.) and KY164 (Shin-Etsu Chemical Co., Ltd.), and the plastic base was pulled out at a rate of 15 mm/sec.

In this manner, the optical member having the primer layer, the hard coat layer, the antireflection film, and the water and oil repellent layer formed on each of the opposite surfaces of the plastic base was obtained.

<Examples 2 to 10>

Except that the number of layers constituting the antireflection film and the physical thickness of each layer constituting the antireflection film were adjusted as shown in Table 1 described later, the optical members were obtained according to the same procedures as those in Example 1.

<Example 11>

Except that a polyurethane primer layer (thickness: 1 μm) with a refractive index of 1.50 and a silsesquioxane hard coat layer (thickness: 10 μm) with a refractive index of 1.50 were used in place of the polyurethane primer layer (thickness: 1 μm) with a refractive index of 1.67 and the silicon hard coat layer (thickness: 3 μm) with a refractive index of 1.67, respectively, the optical member was obtained according to the same procedures as those in Example 1. Note that the silsesquioxane hard coat layer with a refractive index of 1.50 was formed through ultraviolet curing and thermal curing of a hard coat composition containing silsesquioxane having an oxetanyl group, a polyfunctional epoxy compound, a hydrolysate of an organosilicon compound having an epoxy group, and colloidal silica ($SiO_2$ fine particles) .

Then, except that the physical thickness of each layer constituting the antireflection film was adjusted as shown in Table 1, the optical member was obtained according to the same procedures as those in Example 1.

<Example 12>

A thiourethane-based synthetic resin substrate with a refractive index of 1.60 was used as the plastic base, and the primer layer and the hard coat layer were sequentially formed thereon according to the same procedures as those in Example 1.

Subsequently, the obtained plastic base was set on a rotatable dome installed in a vacuum chamber of a vacuum evaporation device ("MC-1200DLX", manufactured by Satisloh), the chamber was evacuated to a pressure of $3.5 \times 10^{-3}$ Pa, and Ar ion beam cleaning was performed on the hard coat layer for 60 seconds under conditions of an anode voltage of 120 V and an anode current of 3.5 A. Thereafter, a first layer to a seventh layer each having the relevant physical thickness shown in Table 2 described later were stacked through the electron beam process with each of the first to seventh layers being irradiated with an Ar ion beam under conditions of an anode voltage of 120 V and an anode current of 3.5 A, an eighth layer having the physical thickness as shown in Table 2 was stacked through the electron beam process with the eighth layer being irradiated with an $O_2$ ion beam under conditions of an anode voltage of 120 V and an anode current of 2.0 A, and a ninth layer having the physical thickness shown in Table 2 was stacked through the electron beam process with the ninth layer being irradiated with an Ar ion beam under conditions of an anode voltage of 120V and an anode current of 3.5 A, whereby the antireflection film was formed. The antireflection film was formed on each of the opposite surfaces of the plastic base.

The plastic base having the antireflection films was then taken out from the vacuum evaporation device, and the water and oil repellent layer was formed on each antireflection film by dipping. For the material of the water and oil repellent layer, use was made of a mixture liquid of OPTOOL AES4E (fluorine-substituted, alkyl group-containing organosilicon compound solution, manufactured by Daikin Industries, Ltd.) and KY164 (Shin-Etsu Chemical Co., Ltd.), and the plastic base was pulled out at a rate of 15 mm/sec.

In this manner, the optical member having the primer layer, the hard coat layer, the antireflection film, and the water and oil repellent layer formed on each of the opposite surfaces of the plastic base was obtained.

<Example 13>

A thiourethane-based synthetic resin substrate with a refractive index of 1.60 was used as the plastic base, and the primer layer and the hard coat layer were sequentially formed thereon according to the same procedures as those in Example 12.

Then, except that the physical thickness of each layer constituting the antireflection film was adjusted as shown in Table 2, the optical member was obtained according to the same procedures as those in Example 12.

<Comparative Example 1>

Except that the antireflection film was not formed, the optical member was prepared according to the same procedures as those in Example 1.

<Comparative Examples 2 to 9>

Except that the physical thickness of each layer constituting the antireflection film was adjusted as shown in Table 3 described later, the optical members were obtained according to the same procedures as those in Example 1.

<Evaluation>

(Abrasion Resistance Evaluation (Bayer Test Method))

In an oscillating tester performing 150 cycles of reciprocating movements per minute having a reciprocating movement of a 4-inch distance being one cycle, two optical members one of which was prepared in each of Examples and Comparative Examples and the other of which was a standardized product (non-coat CR39) for comparison were set at the bottom surface of a tray such that their convex surfaces faced upward, Alundum in an amount of 500 g was poured into the tray, and the tray was shaken for 4 minutes.

Upon completion of shaking, the optical members were taken out from the oscillating tester, and the haze value of the optical member of each of Examples and Comparative Examples and the haze value of the optical member of standardized product for comparison were measured by hazegard plus manufactured by BYK.

With the haze value of the optical member being Hs and the haze value of the standardized product for comparison being Hcr, a ratio R thereof (R = Hs/Hcr) was determined. A case where the ratio R was 10.0 or higher was regarded as satisfactory.

(Adhesion Evaluation)

In the procedures of each of Examples and Comparative Examples, the optical member having the antireflection film being formed was taken out prior to formation of the water and oil repellent layer. The antireflection film of the optical member thus taken out was provided with cuts by a cutter such that 100 squares were formed within a square with each side of 1 cm. Subsequently, cellophane tape was put on the antireflection film provided with the cuts forming the 100 squares, and immediately thereafter an operation of swiftly pulling the cellophane tape in a vertical direction to peel the tape was repeated five times. The antireflection film having undergone the forgoing operations was observed to see whether the 100 squares have been peeled. A case where no peeling was observed was rated "A", while a case where even partial peeling was observed was rated "B."

(Antireflection Performance Evaluation)

Reflectance of the convex surface of the prepared optical member at a wavelength of 380 to 780 nm was measured by USPM-RU manufactured by Olympus Corporation. Luminous reflectance Rv was determined based on the obtained reflectance, and a case of RV < 1.0% was rated "A," a case of 1.0% ≤ Rv < 2.0% "B," a case of 2.0% ≤ Rv < 3.0% "C," and a case of 3.0% ≤ Rv "D."

In Tables 1 to 3, the $ZrO_2$ layer and the $SiO_2$ layer had refractive indices of 2.00 and 1.47, respectively.

Each "layer constitution" space in Tables 1 to 3 shows the layers constituting the antireflection film. Note that the respective layers are listed from the top in the "layer constitution" space in the order that the layers are disposed from the plastic base side. In addition, references such as "H1" and "H2" indicate order of the high refractive index layers from the plastic base side, while references such as "L1" and "L2" order of the low refractive index layers from the plastic base side. For instance, "1:ZrO2(H1)" refers to the $ZrO_2$ layer disposed at the first position from the plastic base in the antireflection film and corresponds to the first high refractive index layer from the plastic base side. Furthermore, "6:$SiO_2$ layer (L3)" refers to the $SiO_2$ layer disposed at the sixth position from the plastic base in the antireflection film and corresponds to the third low refractive index layer from the plastic base side.

In Tables 1 to 3, each numerical value in the "layer constitution" spaces shows the physical thickness of the layer. For instance, if "1:$ZrO_2$(H1)" shows "80," it is indicated that the physical thickness of the first high refractive index layer is 80 nm.

[Table 1]

| Table 1 | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| Film constitution (nm) | 1:$ZrO_2$(H1) | 11 | 11 | 10 | 10 | 15 | 15 | 10 | 10 | 10 | 11 | 15 |
| | 2:$SiO_2$(L1) | 80 | 80 | 200 | 100 | 300 | 100 | 250 | 100 | 100 | 80 | 100 |
| | 3:$ZrO_2$(H2) | 8 | 8 | 10 | 10 | 10 | 10 | 10 | 10 | 10 | 10 | 20 |
| | 4:$SiO_2$(L2) | 400 | 320 | 300 | 400 | 200 | 400 | 250 | 400 | 400 | 420 | 400 |
| | 5:$ZrO_2$(H3) | 25 | 25 | 20 | 20 | 20 | 20 | 20 | 20 | 70 | 20 | 20 |
| | 6:$SiO_2$(L3) | 25 | 25 | 30 | 30 | 30 | 30 | 30 | 25 | 95 | 30 | 30 |
| | 7:$ZrO_2$(H4) | 70 | 70 | 70 | 70 | 70 | 70 | 70 | 35 | | 100 | 70 |
| | 8:$SiO_2$(L4) | 90 | 90 | 95 | 95 | 95 | 95 | 95 | 25 | | 90 | 95 |
| | 9:$ZrO_2$(H5) | | | | | | | | 35 | | | |
| | 10:$SiO_2$(L5) | | | | | | | | 95 | | | |
| Relational expression | L1+L2≧400 | 480 | 400 | 500 | 500 | 500 | 500 | 500 | 500 | 500 | 500 | 500 |
| | L1/H1525 | 7.3 | 7.3 | 20.0 | 10.0 | 20.0 | 6.7 | 25.0 | 10.0 | 10.0 | 7.3 | 6.7 |
| | (L1+L2)/H1≦50 | 43.6 | 36.4 | 50.0 | 50.0 | 33.3 | 33.3 | 50.0 | 50.0 | 50.0 | 45.5 | 33.3 |
| Evaluation | Abrasion resistance | 11.5 | 10.6 | 13.5 | 15.1 | 14.7 | 13.1 | 12.5 | 12.7 | 13.5 | 13.9 | 13.4 |
| | Adhesion | A | A | A | A | A | A | A | A | A | A | A |
| | Antireflection performance | A | A | C | A | B | A | A | C | C | A | A |

[Table 2]

| Table 2 | | Example 12 | Example 13 |
|---|---|---|---|
| Film constitution (nm) | 1:$ZrO_2$(H1) | 13 | 13 |
| | 2:$SiO_2$(L1) | 75 | 75 |
| | 3:$ZrO_2$(H2) | 13 | 8 |
| | 4:$SiO_2$(L2) | 410 | 340 |
| | 5:$ZrO_2$(H3) | 25 | 20 |
| | 6:$SiO_2$(L3) | 25 | 30 |
| | 7:$ZrO_2$(H4) | 90 | 60 |
| | 8:$SnO_2$ | 6 | 6 |
| | 9:$SiO_2$(L4) | 90 | 100 |
| Relational expression | L1+L2≧400 | 485 | 415 |
| | L1/H1≦25 | 5.8 | 5.8 |
| | (L1+L2)/H1≦50 | 37.3 | 31.9 |
| Evaluation | Abrasion resistance | 15.1 | 19.8 |
| | Adhesion | A | A |
| | Antireflection performance | A | A |

[Table 3]

| Table 3 | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|
| Film constitution (nm) | 1:$ZrO_2$(H1) | - | 7 | 7 | 7 | 7 | 11 | 11 | 10 | 0 |
| | 2:$SiO_2$(L1) | - | 80 | 80 | 80 | 80 | 80 | 80 | 300 | 300 |
| | 3:$ZrO_2$(H2) | - | 8 | 8 | 8 | 8 | 8 | 8 | 10 | 5 |
| | 4:$SiO_2$(L2) | - | 400 | 320 | 240 | 150 | 240 | 150 | 200 | 260 |
| | 5:$ZrO_2$(H3) | - | 25 | 25 | 25 | 25 | 25 | 25 | 20 | 20 |
| | 6:$SiO_2$(L3) | - | 25 | 25 | 25 | 25 | 25 | 25 | 30 | 30 |
| | 7:$ZrO_2$(H4) | - | 70 | 70 | 70 | 70 | 70 | 70 | 70 | 75 |
| | 8:$SiO_2$(L4) | - | 90 | 90 | 90 | 90 | 90 | 90 | 95 | 95 |
| Relational expression | L1+L22400 | - | 480 | 400 | 320 | 230 | 320 | 230 | 500 | 560 |
| | L1/H1<30 | - | 11.4 | 11.4 | 11.4 | 11.4 | 7.3 | 7.3 | 30.0 | 60.0 |
| | (L1+L2)/H1<50 | - | 68.6 | 57.1 | 45.7 | 32.9 | 29.1 | 20.9 | 50.0 | 112.0 |
| Evaluation | Abrasion resistance | - | 12.2 | 10.9 | 9.2 | 7.3 | 9.1 | 8.2 | 15.9 | 13.3 |
| | Adhesion | - | B | B | A | A | A | A | B | B |
| | Antireflection performance | - | - | - | - | - | - | - | - | - |

Note that in Comparative Example 9 above, the layer shown in the "3:$ZrO_2$(H2)" space corresponds to the first high refractive index layer (H1), and the "3:$ZrO_2$(H2)" space was used for the "H1" value in "L1/H1" and "(L1 + L2)/H1."

Table 1 revealed that the predetermined optical member can achieve the desired effect.

In particular, it was confirmed that when Expression 4 (L2 ≥ L1) is satisfied, antireflection performance is more excellent.

REFERENCE SIGNS LIST

| | |
|---|---|
| 10 | optical member |
| 12 | plastic base |
| 14 | primer layer |
| 16 | hard coat layer |
| 18 | antireflection film |
| 20 | water and oil repellent layer |
| 22H | first high refractive index layer |
| 22L | first low refractive index layer |
| 24H | second high refractive index layer |
| 24L | second low refractive index layer |
| 26H | third high refractive index layer |
| 26L | third low refractive index layer |
| 28H | fourth high refractive index layer |
| 28L | fourth low refractive index layer |

## Claims

**1.** An optical member (10), comprising:

a plastic base (12);
a hard coat layer (16) disposed on the plastic base;
and
an antireflection film (18) disposed on the hard coat layer,
wherein the antireflection film contains high refractive index layers and low refractive index layers that are alternately stacked,
wherein a high refractive index layer of the high refractive index layers contains an oxide of at least one selected from the group consisting of titanium, zirconium, aluminum, niobium, tantalum, and lanthanum,
wherein a low refractive index layer of the low refractive index layers contains at least one selected from the group consisting of silicon oxide, calcium fluoride, and magnesium fluoride,
wherein the antireflection film has at least six layers in total of the high refractive index layers and the low refractive index layers,
wherein a layer disposed closest to the plastic base in the antireflection film is the high refractive index layer, and
wherein, in the antireflection film, when the low refractive index layer disposed closest to the plastic base is a first low refractive index layer (22L), the low refractive index layer disposed next closest to the plastic base after the first low refractive index layer is a second low refractive index layer (24L), and the high refractive index layer disposed closest to the plastic base is a first high refractive index layer (22H), relations of Expressions 1 to 3 are satisfied,

$$\text{Expression 1} \quad L1 + L2 \geq 400 \text{ nm}$$

$$\text{Expression 2} \quad L1/H1 \leq 25.0$$

$$\text{Expression 3} \quad (L1 + L2)/H1 \leq 50.0$$

where L1 denotes a physical thickness of the first low refractive index layer, L2 denotes a physical thickness of the second low refractive index layer, and H1 denotes a physical thickness of the first high refractive index layer.

2. The optical member according to claim 1, wherein Expression 4 is satisfied,

$$\text{Expression 4} \quad L2 \geq L1.$$

3. The optical member according to claim 1 or 2, wherein the high refractive index layer contains zirconium oxide.

4. The optical member according to any one of claims 1 to 3, wherein the low refractive index layer contains silicon dioxide.

5. The optical member according to any one of claims 1 to 4, comprising a water and oil repellent layer (20) on a surface of the antireflection film on an opposite side from the plastic base.

6. The optical member according to any one of claims 1 to 5, wherein the antireflection film further contains an $SnO_2$ layer or an ITO layer.

7. The optical member according to any one of claims 1 to 6, wherein the optical member is used for a spectacle lens.

**Patentansprüche**

1. Optisches Element (10), umfassend:

eine Kunststoffbasis (12);
eine Hartbeschichtung (16), die auf der Kunststoffbasis angeordnet ist; und
ein Antireflektionsfilm (18), der auf der Hartbeschichtung angeordnet ist,
wobei der Antireflektionsfilm Schichten mit hohem Brechungsindex und Schichten mit niedrigem Brechungsindex enthält, die abwechselnd gestapelt sind,
wobei eine Schicht mit hohem Brechungsindex der Schichten mit hohem Brechungsindex ein Oxid von mindestens einem enthält, ausgewählt aus der Gruppe bestehend aus Titan, Zirkonium, Aluminium, Niobium, Tantal und Lanthan,
wobei eine Schicht mit niedrigem Brechungsindex der Schichten mit niedrigem Brechungsindex mindestens eines enthält ausgewählt aus der Gruppe bestehend aus Siliciumoxid, Calciumfluorid und Magnesiumfluorid,
wobei der Antireflektionsfilm insgesamt mindestens sechs Schichten der Schichten mit hohem Brechungsindex und der Schichten mit niedrigem Brechungsindex aufweist,
wobei eine Schicht am nächsten zu der Kunststoffbasis im Antireflektionsfilm die Schicht mit hohem Brechungsindex ist, und
wobei im Antireflektionsfilm, wenn die Schicht mit niedrigem Brechungsindex, die am nächsten zur Kunststoffbasis angeordnet ist, eine erste Schicht mit niedrigem Brechungsindex (22L) ist, die Schicht mit niedrigem Brechungsindex, die am folgenden nächsten zur Kunststoffbasis nach der ersten Schicht mit niedrigem Brechungsindex angeordnet ist, eine zweite Schicht mit niedrigem Brechungsindex (24L) ist, und wenn die Schicht mit hohem Brechungsindex, die am nächsten zur Kunststoffbasis angeordnet ist, eine erste Schicht mit hohem Brechungsindex (22H) ist, die Verhältnisse nach den Ausdrücken 1 bis 3 erfüllt werden,

$$\text{Ausdruck 1} \quad L1 + L2 \geq 400 \text{ nm}$$

$$\text{Ausdruck 2} \quad L1/H1 \leq 25{,}0$$

$$\text{Ausdruck 3} \quad (L1 + L2)/H1 \leq 50{,}0$$

wobei L1 eine physische Dicke der ersten Schicht mit niedrigem Brechungsindex bezeichnet, L2 eine physische Dicke der zweiten Schicht mit niedrigem Brechungsindex bezeichnet und H1 eine physische Dicke der ersten Schicht mit hohem Brechungsindex bezeichnet.

2. Optisches Element nach Anspruch 1, wobei Ausdruck 4 erfüllt ist,

$$\text{Ausdruck 4} \quad L2 \geq L1.$$

3. Optisches Element nach Anspruch 1 oder 2, wobei die Schicht mit hohem Brechungsindex Zirconiumoxid enthält.

4. Optisches Element nach einem der Ansprüche 1 bis 3, wobei die Schicht mit niedrigem Brechungsindex Siliziumdioxid enthält.

5. Optisches Element nach einem der Ansprüche 1 bis 4, umfassend eine wasserund ölabweisende Schicht (20) auf einer Oberfläche des Antireflektionsfilms an einer Seite gegenüber der Kunststoffbasis.

6. Optisches Element nach einem der Ansprüche 1 bis 5, wobei der Antireflektionsfilm weiter eine $SnO_2$-Schicht oder eine ITO-Schicht enthält.

7. Optisches Element nach einem der Ansprüche 1 bis 6, wobei das optische Element für eine Brillenlinse verwendet wird.

**Revendications**

1. Élément optique (10), comprenant :

une base plastique (12) ;
une couche de revêtement dur (16) disposée sur la base plastique ; et
un film antireflet (18) disposé sur la couche de revêtement dur,
dans lequel le film antireflet contient des couches à indice de réfraction élevé et des couches à indice de réfraction faible qui sont alternativement empilées,
dans lequel une couche à indice de réfraction élevé des couches à indice de réfraction élevé contient un oxyde d'au moins un sélectionné dans le groupe consistant en titane, zirconium, aluminium, niobium, tantale, et lanthane,
dans lequel une couche à indice de réfraction faible des couches à indice de réfraction faible contient au moins un sélectionné dans le groupe consistant en oxyde de silicium, fluorure de calcium, et fluorure de magnésium,
dans lequel le film antireflet présente au moins six couches au total des couches à indice de réfraction élevé et des couches à indice de réfraction faible,
dans lequel une couche disposée le plus près de la base plastique dans le film antireflet est la couche à indice de réfraction élevé, et
dans lequel, dans le film antireflet, lorsque la couche à indice de réfraction faible disposée le plus près de la base plastique est une première couche à indice de réfraction faible (22L), la couche à indice de réfraction faible disposée ensuite le plus près de la base plastique après la première couche à indice de réfraction faible est une seconde couche à indice de réfraction faible (24L), et la couche à indice de réfraction élevé disposée le plus près de la base plastique est une première couche à indice de réfraction élevé (22H), des relations des Expressions 1 à 3 sont satisfaites,

$$\text{Expression 1 : } L1 + L2 \geq 400\text{ nm}$$

$$\text{Expression 2 : } L1/H1 \leq 25{,}0$$

$$\text{Expression 3 : } (L1 + L2) / H1 \leq 50{,}0$$

où L1 désigne une épaisseur physique de la première couche à indice de réfraction faible, L2 désigne une épaisseur physique de la seconde couche à indice de réfraction faible, et H1 désigne une épaisseur physique de la première couche à indice de réfraction élevé.

2. Élément optique selon la revendication 1, dans lequel l'Expression 4 est satisfaite,

$$\text{Expression 4 : } L2 \geq L1.$$

3. Élément optique selon la revendication 1 ou 2, dans lequel la couche à indice de réfraction élevé contient de l'oxyde de zirconium.

4. Élément optique selon l'une quelconque des revendications 1 à 3, dans lequel la couche à indice de réfraction faible contient du dioxyde de silicium.

5. Élément optique selon l'une quelconque des revendications 1 à 4, comprenant une couche hydrofuge et ignifuge (20) sur une surface du film antireflet sur un côté opposé par rapport à la base plastique.

6. Élément optique selon l'une quelconque des revendications 1 à 5, dans lequel le film antireflet contient en outre une couche de $SnO_2$ ou une couche d'ITO.

7. Élément optique selon l'une quelconque des revendications 1 à 6, dans lequel l'élément optique est utilisé pour un verre de lunettes.

FIG. 1

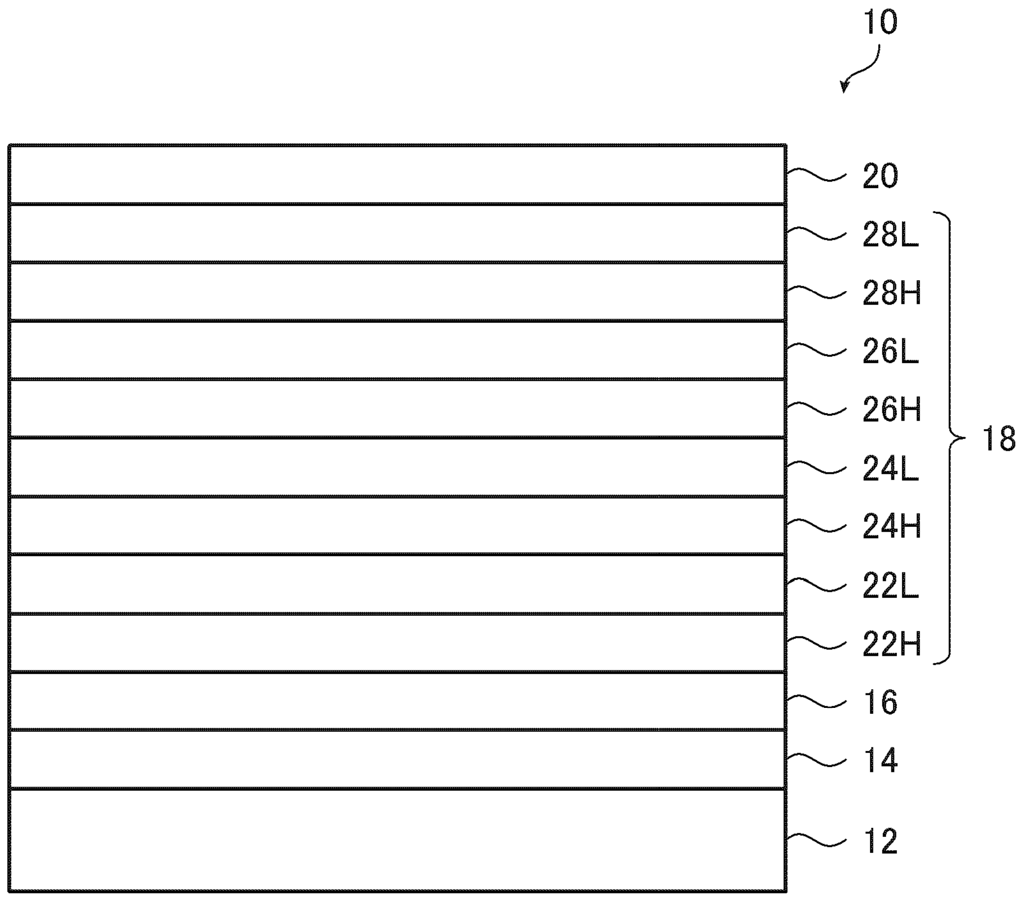

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019015764 A
- JP 2003329803 A
- US 2015234209 A1
- US 8189261 B2
- US 2016154254 A1
- US 6250758 B1